# EUROPEAN PATENT SPECIFICATION

(11) **EP 2 007 148 B1**
(45) Date of publication and mention of the grant of the patent: **07.07.2010**
(21) Application number: 06840621.4
(22) Date of filing: 25.12.2006
(51) Int. Cl.: H04W 36/14

(54) **METHOD AND APPLICATION OF REDUCING TRAFFIC INTERRUPT OF A TERMINAL DURING PS HANDOVER PROCEDURE OF MOBILE COMMUNICATION**
VERFAHREN UND ANWENDUNG VON REDUZIERUNG EINER VERKEHRSUNTERBRECHUNG EINES ENDGERÄTS WÄHREND EINER PS-HANDOVER-PROZEDUR DER MOBILKOMMUNIKATION
PROCÉDÉ ET APPLICATION DE RÉDUCTION D'INTERRUPTION DE TRAFIC PENDANT UNE PROCÉDURE DE TRANSFERT PS DE COMMUNICATION MOBILE

(30) Priority: 29.03.2006 CN 200610073424; 29.03.2006 CN 200610073422; 23.10.2006 CN 200610140225
(43) Date of publication of application: 24.12.2008
(73) Proprietor: Huawei Technologies Co., Ltd., Longgang District, Shenzhen Guangdong 518129 (CN)
(72) Inventor: ZHAO, Gang, Guangdong Province 518129 (CN); HU, Ning, Guangdong Province 518129 (CN); WANG, Chao, Guangdong 518129 (CN); YUAN, Yi, Guangdong 518129 (CN)
(74) Representative: Kreuz, Georg Maria
(86) International application number: PCT/CN2006/003569
(87) International publication number: WO 2007/109941

(56) References cited:
- WO-A-01/72077
- CN-A- 1 283 064
- CN-A- 1 382 360
- CN-A- 1 507 291
- US-A1- 2005 037 758
- US-A1- 2005 070 275
- "Proposed Draft Input to the TS on Packet Switched Handover for GERAN A/Gb mode; Stage 2; (Release 6) v0.1.0 on PS handover Signaling Flows" 3RD GENERATION PARTNERSHIP PROJECT (3GPP); TECHNICALSPECIFICATION GROUP (TSG) RADIO ACCESS NETWORK (RAN); WORKINGGROUP 2 (WG2), XX, XX, vol. TDOC G2-040082, 12 January 2004 (2004-01-12), pages 1-43, XP003015535

## Description

### FIELD OF THE INVENTION

The present invention relates to the field of mobile communication technologies, and in particular, to a method, a system and a device for monitoring radio resources by a mobile station to reduce service interruption of the mobile station during PS handover in mobile communications.

### BACKGROUND OF THE INVENTION

In the Packet Switched (PS) Domain of a Global System for Mobile Communication (GSM), real-time packet services of session type and stream type, etc., have strict requirements on the Quality of Service (QoS) of jitter ratio and packet loss ratio. Therefore, jitter ratio and packet loss ratio of the real-time packet services are lowered by introducing PS handover.

According to different factors considered, PS handover may be classified into different types. According to the mode of a Mobile Station (MS), PS handover may be classified into PS handover of A/Gb-to-A/Gb mode, PS handover of A/Gb-to-lu mode and PS handover of lu-to-lu mode. According to the network element concerned, PS handover may be classified into Intra Base Station System (BSS) handover, Intra Service GPRS Supporting Node (SGSN) handover and Inter SGSN handover. According to being synchronous or not, PS handover may be classified into synchronous PS handover and asynchronous PS handover. Synchronous PS handover means that the source cell at which the MS locates before PS handover is synchronous with the target cell at which the MS locates after PS handover. Because the MS has known the Timing Advance (TA) in a synchronous PS handover, the step in which the MS sends an Access Burst in the target cell is optional, and the MS may directly send a Normal Burst. Asynchronous PS handover means that the source cell at which the MS locates before PS handover is asynchronous with the target cell at which the MS locates after PS handover. In an asynchronous PS handover, before sending a Normal Burst in the target cell, the MS should obtain the TA by sending an Access Burst first.

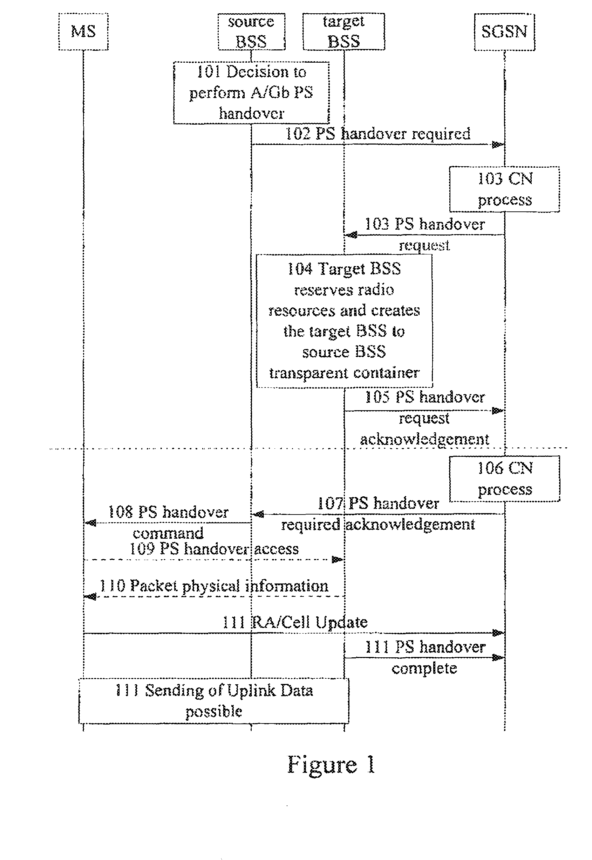

Figure 1 shows a flow chart of PS handover in the prior art. As shown in Figure 1, PS handover includes two stages: preparation and execution. Specifically, the implementing process includes the following steps.

PS Handover Preparation Stage

In Step 101, a source BSS decides to initiate PS handover (Decision to Perform A/Gb PS handover). There are many causes for PS handover, for example, the source BSS may trigger PS handover according to a measurement report from an MS; the source BSS may also trigger PS handover according to a message for requesting cell reselection reported from an MS, which may be a Packet Cell Change Notification; or, the serving cell resources of the source BSS is limited, so that the BSS may initiate PS handover; or, the source BSS initiates PS handover based on a Cell Change Order of UMTS Territorial Radio Access Network (UTRAN COO) from SGSN, so that the MS may obtain better services in the new cell.

In Step 102, the source BSS sends a PS handover Request carrying a handover cause value, a source cell identifier and a target cell identifier, to the SGSN (PS handover required), If the source BSS triggers PS handover according to the measurement report from an MS, or the source BSS initiates PS handover due to the limited serving cell resources, the target cell may be selected by the source BSS according to the measuring result or the load. If the source BSS triggers PS handover according to a message for requesting cell reelection reported by an MS, or if the source BSS initiates PS handover according to a UTRAN CCO from a SGSN, the target cell may be selected by the MS or other BSS and notified to the source BSS.

In Step 103, after receiving the PS handover Request, the SGSN determines whether the current PS handover type is intra BSS or Intra SGSN, or Inter SGSN, and performs the subsequent operations according to the determined PS handover type. The SGSN may decide the handover type according to the location of the source cell and the target cell. If the source cell and the target cell are administrated by the same BSS, the current PS handover is Intra BSS type; if the source cell and the target cell are administrated by the same SGSN, the current PS handover is Intra SGSN type; if the source cell and the target cell are administrated by different SGSNs, the current PS handover is Inter SGSN type.

If the current PS handover is infra BSS or Intra SGSN, type, the SGSN determines the target BSS according to the target cell identifier, and determines whether the Routing Area (RA) is changed. If the RA is changed, the SGSN allocates a Packet Temporary Mobile Subscriber Identity (P-TMSI) to the MS, and obtains a Temporary Logical Link Identifier (TLLI) according to the P-TMSI, and then sends a PS handover Request, in which the P-TMSI and TTLI is carried, to the target BSS. If the RA is not changed, the SGSN sends a PS handover Request to the target BSS.

If the current PS handover is Inter SGSN type, the source SGSN determines the target SGSN according to the target cell identifier, and then interacts with the target SGSN. The source SGSN provides the target cell identifier and the MS-relatcd information to the target SGSN. The target SGSN determines the target BSS according to the target cell identifier, and sends a PS handover Request to the target BSS. The source SGSN is the SGSN controlling the source BSS at which the MS locates before PS handover, and the target SGSN is the SGSN controlling the target BSS at which the MS locates after PS handover.

In Step 104, after receiving the PS handover Request, the target BSS allocates and reserves radio resources for the MS according to an allocation policy and the radio resources which could be allocated currently, and creates a Container from the target BSS to the source BSS, the content of which is the radio resource allocation information from the target BSS to the source BSS, i.e., the description information of the radio resource allocated to the MS, such as Temporary Flow Identity (TFI). The radio resource allocated and reserved by the target BSS for the MS at least includes uplink Temporary Block Flow (TBF), which may be identified with an Uplink State Flag (USF).

In Step 105, if the current PS handover is Intra BSS or Intra SGSN type, the target BSS sends to the SGSN a PS handover Request Acknowledgment carrying Container information; if the PS handover is Inter SGSN type, the target BSS sends to the target SGSN a PS handover Request Acknowledgment carrying Container information.

PS Handover Execution Stage

In Step 106, if the current PS handover is Inter SGSN type, after receiving the PS handover Request Acknowledgment, the target SGSN sends to the source SGSN handover information, such as Network Service Access Point Identifier (NSAPI) and User plane of GPRS Tunneling Protocol Number (GTP-U Number); if the current PS handover is Intra BSS or Intra SGSN type, this step is omitted.

In Step 107, the SGSN sends a PS handover Required Acknowledgment carrying the Container content to the source BSS used for notifying the source BSS to be ready for the handover. If the current PS handover is Inter SGSN type, the SGSN in this step will be the source SGSN.

In Step 108, after receiving the PS handover Request Acknowledgment, the source BSS terminates the uplink service of the MS according to the QoS requirement, and then interrupts the Logic Link Control (LLC) Protocol Data Unit (PDU) of the downlink TBF of the MS, and sends a PS handover command carrying the target BSS identifier to the MS used for notifying the MS to perform PS handover.

In Step 109, after receiving the PS handover command, the MS stops temporarily the uplink subscriber data transmission, and buffers or discards the uplink subscriber data according to the QoS requirement of the current service. And then the MS starts to run the handover command, switching to the time slot and radio channel of the target cell according to the target BSS identifier, and sending a PS handover Access message carrying a handover reference to the target BSS according to the PS handover command. The handover reference is used by the target cell for identifying the MS and determining whether the MS could access the target cell. The target cell allocates radio resources to the MS and waits for the MS to access it.

In Step 110, after receiving the PS handover Access message, the target BSS returns a Packet Physical Information message carrying a TA to the MS used for notifying the MS of the correct TA.

In Step 111, the MS sends a Radio Link Control (RLC)/Media Access Control (MAC) data block in Normal Burst Format to the target BSS. The MS starts to recover the sending of uplink LLC PDU, such as location update request, in a radio channel allocated by the target BSS using Normal Burst Format. When receiving the first correct RLC/MAC data block in Normal Burst Format from the MS, the target BSS sends a PS handover complete message to the SGSN via a Gb interface, notifying the SGSN that the PS handover is completed.

Step 109 and Step 110 are optional in a synchronous handover. In an asynchronous handover, Step 109 and Step 110 should be performed. The MS may directly send an RLC/MAC data block in Normal Burst Format to the target BSS, rather than send a PS handover Access message to access the target BSS. And then, the target BSS also omits the step of sending the corresponding Packet Physical Information message to the MS.

The above Container content may carry a PS handover command, and the content of the message may include: page mode (PAGE_MODE), TBF identifier (Global TFI), container identifier (CONTAINER_ID) and A/Gb-mode-based PS handover payload (PS handover to A/Gb Mode Payload) or Iu-mode-based PS handover payload (PS handover to UTRAN/GERAN Iu Mode Payload). In particular, the payload consists of radio access part and core network part. The radio access part includes synchronous handover indication, dynamically allocated or extended dynamically allocated uplink and downlink TBF parameters, PS handover reference, general parameters for accessing target cell. And the core network part includes frame synchronization and encryption.

It can be seen from the above that, in Step 104 at the PS handover preparation stage, after receiving a PS handover Request sent from the SGSN, the target BSS reserves radio resources including at least an uplink TBF for the MS, and in Step 109 and Step 111 at the PS handover execution stage, the PS handover Access message or the uplink data block sent from the MS to the target BSS are scheduled by the uplink TBF. Therefore the MS can send the PS handover Access message or uplink data block to the target BSS after the uplink TBF allocated is received on the allocated channel, and the PS handover Access message should be sent in a block allocated by the uplink TBF.

Another solution is provided in WO01/72077 published on 27 September 2001. It discloses a method and arrangement for controlling a cell change performed by a terminal of a cellular radio system. In particular it relates to a cell change in a situation where the terminal is connected to a special service provided by its current cell, e.g. to the GPRS service

In conclusion, the target BSS allocates an uplink TBF to the MS. After completing the allocation and reservation of the radio resources, the target BSS does not monitor the radio resources reserved. In the PS handover process, if the MS does not normally receive the uplink TBF allocated by the target BSS due to a certain cause, the MS will be waiting for the scheduling of the uplink TBF in the target cell all the time, thereby causing an unnecessary interruption of the MS's service.

### SUMMARY OF THE INVENTION

The present invention provides a method, a system and a mobile station as defined in the appended independent claims for reducing service interruption of a mobile station, MS, by monitoring radio resources via the MS.

To achieve the above objects, an embodiment of the present invention provides a method for reducing service interruption of a mobile station during PS handover in mobile communication, which is applied in a PS handover execution process, the method includes:

After receiving a PS handover command sent from a source BSS, a mobile station monitors a radio channel of a target BSS; and

If the MS receives the radio resource information from the target BSS in the radio channel in a certain period of time, the MS starts to run the PS handover command and completes the PS handover; if the MS does not receive the radio resource information from the target BSS in the radio channel, the MS performs a handover failure flow.

Correspondingly, an embodiment of the present invention further provides an MS, including a monitor and a controller.

The monitor is adapted to monitor a radio channel of a target BSS and send the monitoring result to the controller, after a MS receives a PS handover command sent by an source BSS;

The controller is adapted to control the monitoring of the monitor the radio channel of the target BSS and execute a handover failure flow if the timing result of the timer has not been received within a certain period of time.

Furthermore, an embodiment of the present invention provides a system for reducing service interruption of a mobile station during PS handover in mobile communication, including an MS and a network-side device. The MS includes a monitor, a timer and a controller, and the network-side device includes a source BSS and a target BSS.

The source BSS is adapted to send a PS handover command to the controller;

The target BSS is adapted to send radio resource information to the monitor;

The monitor is adapted to monitor whether the target BSS sends the radio resource information and send the monitoring result to the controller;

The timer is adapted to count the monitoring time of the monitor and send the timing result to the controller; and

The controller is adapted to control the monitoring of the monitor and the timing of the timer when receiving the PS handover command, and according to the timing result, run the PS handover command and complete the PS handover if the monitoring result from the monitor is received in the timing range of the timer; and execute a handover failure flow if the timing result of the timer has not been received yet until the timer expires.

In the method for reducing service interruption of a mobile station during PS handover in mobile communication according to the embodiments of the present invention, after receiving a PS handover command sent from an source BSS, a mobile station monitors a radio channel of a target BSS, and a handover failure operation is added in the case that the MS does not receive the radio resource information allocated by the target BSS in a certain period of time, thereby avoiding the service interruption of the MS to the maximum extent.

### BRIEF DESCRIPTION OF THE DRAWINGS

Figure 1 is a flow chart of PS handover in the prior art;

Figure 2 is a flow chart of PS handover according a first embodiment of the present invention;

Figure 3 is a structural diagram of a MS according to an embodiment of the present invention; and

Figure 4 is a structural diagram of a system for reducing service interruption of a mobile station during PS handover in mobile communication according to an embodiment of the present invention.

### DETAILED DESCRIPTION OF THE EMBODIMENTS

An embodiment of the present invention provides a method for reducing service interruption of a mobile station during PS handover in a Mobile communication system. According to the method, in a PS handover process, when receiving a handover command from the source BSS, the MS switches to the target BSS, monitors a radio channel of the target BSS and determines whether the radio resource information allocated by the target BSS is received in a certain period of time. If the radio resources allocated by the system are received in the certain period of time, the MS starts to run the handover command and completes the PS handover, If the radio resources allocated by the system is not received in the certain period of time, the MS returns to the cell of the source BSS, enters a handover failure flow and executes a handover failure operation.

In the above method, the certain period of time may be preset in the MS, or be obtained by the MS from a system message or a channel associated message carrying a timer sent from the system.

In a practical application, a timer or a counter may be initiated for timing, so as to determine whether a PS handover command has been received for more than a certain period of time.

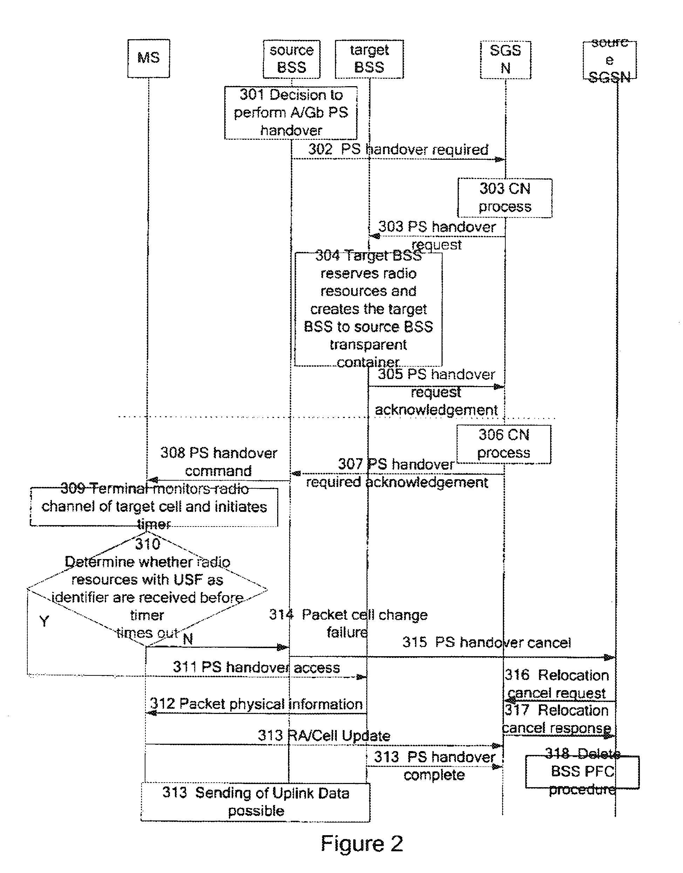

In a first embodiment of the present invention, the technical solution of the present invention is implemented with a timer for timing. In this embodiment, when receiving a PS handover command sent from the source BSS, the MS switches to the target BSS, and initiates a timer and monitors the radio channel of the target BSS. If the MS receives the radio resources, which are allocated by the target BSS and are using USF as the identifier, before the timer expires, the MS stops the timer and continues with the handover flow. If the MS does not receive the radio resources, which are allocated by the BSS and are using USF as the identifier,, after the timer expires, the MS returns to the cell of the source BSS and enters a handover failure flow. As shown in Figure 2, the PS handover process implemented in this embodiment particularly includes the following steps.

Step 301 to Step 308 are the same as Step 10 1 to Step 108 in the prior art.

In Step 309, when receiving the PS handover command, the MS stops temporally the uplink subscriber data transmission, and buffers or discards the uplink subscriber data according to the QoS requirement of the current service, and then the MS switches to the time slot and radio channel of the target cell according to the target BSS identifier and starts a timer.

In Step 310, the MS determines whether radio resources with USF as the identifier are received in the radio channel of the target cell before the timer expires. If the radio resources are received, the MS stops the timer, and executes Step 311 to continue with a normal handover flow; otherwise, the timer expires, and the MS executes Step 314, thus entering a handover failure flow.

In Step 311, the MS sends a PS handover Access message to the target BSS according to the PS handover command.

Step 312 to Step 313 are the normal handover flow, which are the same as Step 110 to Step 111 in the prior art.

In Step 314, the MS returns to the source cell of the source BSS and sends a Packet Cell Change Failure message to the source BSS.

If the MS returns to the source cell and the resources of the source BSS are not released, the MS is in the packet transfer mode, and then the MS sends a Packet Cell Change Failure message in a Packet Access Control Channel (PACCH), to notify the system of the handover failure;

If the MS returns to the source cell and the resources of the source BSS are released, the MS is in the idle mode. At this point, if there is no data to be sent by the MS, the MS initiates a random access of the type 'single block without TBF establishment' in PCCCH or 'single block packet access' in CCCH, and then sends a Packet Cell Change Failure message in a single uplink channel to be allocated subsequently, notifying the system of the handover failure. If there is uplink data to be sent by the MS, the MS triggers to establish an uplink TBF, and then sends a Packet Cell Change Failure message over this TBF, to notify the system of the handover failure.

In Step 315, when receiving the Packet Cell Change Failure message, the source BSS sends a PS handover Cancel message to the source SGSN.

In Step 316, the source SGSN sends a Relocation Cancel Request to the target SGSN used for notifying the target SGSN to terminate the handover.

In Step 317, after receiving the Relocation Cancel Request, the target SUSN sends a Relocation Cancel Response to the source SGSN.

In Step 318, the target SGSN and the target BSS clear the resources allocated for the MS.

In a second embodiment of the present invention, if the source BSS and the target BSS are the same system, the radio resources allocated by the target BSS in the above method are the resources allocated by the BSS in the target cell, and the resources of the source BSS in the above method are the resources allocates by the BSS in the source cell. At this point, the handover failure flow in the above method is performed in the system, and the steps included may be simplified as follows.

A mobile station sends a Packet Cell Change Failure message in a radio channel allocated by the BSS in the source cell. When receiving the Packet Cell Change Failure message, the BSS releases the resources allocated in the target cell.

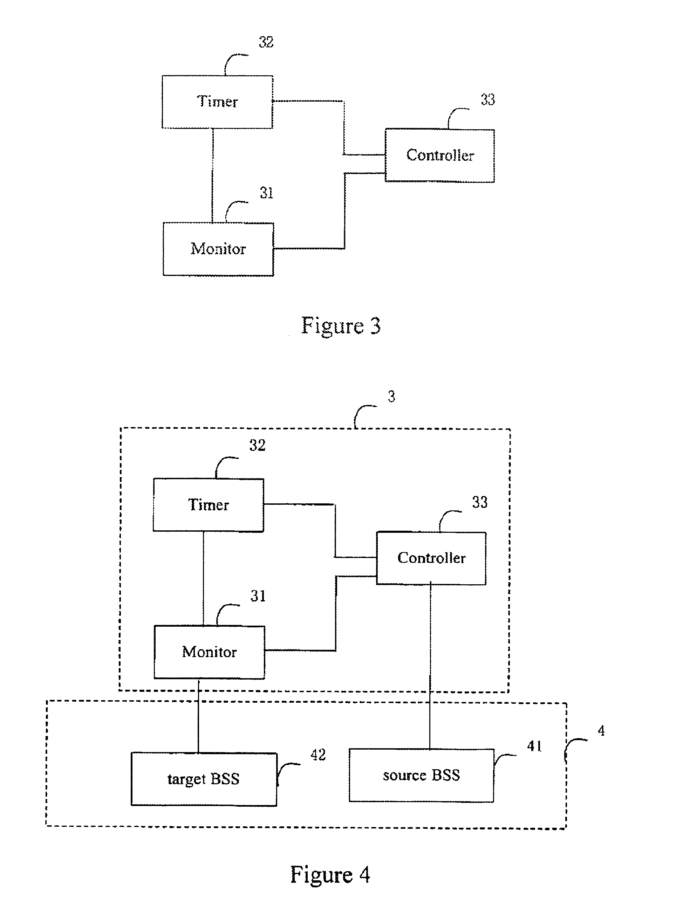

Correspondingly, as shown in Figure 3, an MS is provided, including a monitor 31, a timer 32 and a controller 33.

The monitor 31 is adapted to monitor a radio channel of a target BSS after the MS receives a PS handover command sent from a source BSS, and send the monitoring result to the controller 33.

The timer 32 is adapted to count the monitoring time of the monitor 31 and send the timing result to the controller 33.

The controller 33 is adapted to Control the monitor 31 to monitor and control the timer 32 to time. According to the timing result of the timer 32, the controller 33 is adapted to run the PS handover command and complete the PS handover, if the monitoring result from the monitor 31 is received in the timing range of the timer 32; or if the monitoring result from the monitor 31 has not been received before the timer 32 expires, the controller 33 is adapted to execute a handover failure flow.

The timer 32 may be a timer or a counter.

Furthermore, as shown in Figure 4, a system for reducing service interruption of a mobile station during PS handover in mobile communication is provided, which includes a MS 3 and a network-side device 4. The MS 3 includes a monitor 31, a timer 32 and a controller 33, and the network-side device 4 includes a source BSS 41 and a target BSS 42.

The source BSS 41 is adapted to send a PS handover command to the controller 33.

The target BSS 42 is adapted to send radio resources information to the monitor 31.

The monitor 31 is adapted to monitor whether the target BSS sends radio resources information, and send the monitoring result to the controller 33.

The timer 32 is adapted to count the monitoring time of the monitor 31 and send the timing result to the controller 33.

The controlled 33 is adapted to control the monitor 31 to monitor and control the timer 32 to time when receiving the PS handover command. According to the timing result of the timer 32, the controller 33 is adapted to run the PS handover command and complete the PS handover, if the monitoring result from the monitor 31 is received in the timing range of the timer 32; or if the monitoring result from the monitor 31 has not been received before the timer 32 expires, the controller 33 is adapted to executes a handover failure flow.

The above mentioned is only preferred embodiments of the present invention, and is not used for limiting the scope of the present invention. Accordingly, it is intended that the scope of the present invention is defined by the appended claims.

## Claims

1. A method for reducing service interruption of a mobile station, MS(3), during Packet Switched, PS, Domain handover in mobile communication, **characterized in that** the method comprises:
monitoring, by an MS(3), a radio channel of a target Base Station System, BSS(42), upon reception of a PS handover command sent from a source BSS(41); and
performing, a handover failure flow if the MS(3) fails to receive radio resources information from the target BSS(42) in the radio channel within a certain period of time.

2. The method according to claim 1, further comprising:
running, by the MS(3), the PS handover command and computing the PS handover if the MS(3) receives the radio resources information from the target BSS(42) in the radio channel within the certain period of time;

3. The method according to claim 1 or 2, wherein the certain period of time is obtained by the MS(3) from a system message or a channel associated message, or is preset in the MS(3).

4. The method according to claim 1 or 2, wherein the step of monitoring the radio channel of the target BSS(42) comprises, the MS(3) switches to the radio channel of the target BSS(42), and starts a timer(32) or a counter.

5. The method according to claim 4, wherein the MS(3) starts a timer(32) or a counter according to the following approach:
when receiving the PS handover command from the source BSS(41), the MS(3) starts the timer(32) or the counter provided in the MS(3); and
when receiving radio resources information allocated by the target BSS(42), the MS (3)stops the timer(32) or the counter.

6. The method according to claim 1 or 2, wherein the radio resources information comprises radio resources with Uplink State Flag, USF, as an identifier.

7. The method according to claim1 1 or 2, wherein the handover failure flow comprises:
sending, by the MS(3), a Packet Cell Change Failure message to the source BSS(41);
sending, by the source BSS(41), a PS handover Cancel message to a source Service GPRS Supporting Node, SGSN, upon reception of the Packet Cell Change Failure message;
sending, by the source SGSN, a Relocation Cancel Request to a target SGSN according to the PS handover Cancel message to notify the target SGSN to terminate the handover;
sending, by the target SGSN, a Relocation Cancel Response to the source SGSN upon reception of the Relocation Cancel Request; and
deleting, by the target SGSN, and the target Buss(42), the resources allocated to the MS(3).

8. The method according to claim 7, before sending a Packet Cell Change Failure message to the source BSS(41), further comprising:
the MS(3) returns to the source BSS(41), wherein
the step of sending a Packet Cell Change Failure message to the source BSS(41) comprises:
if the resources of the source BSS(41) are not released,
the MS(3) is in packet transfer mode, and the MS(3) sends the Packet Cell Change Failure message to the source BSS(41) in a packet associated control channel; and
if the resources of the source BSS(41) are released,
the MS(3) is in an idle state and sends the Packet Cell Change Failure message to the source BSS(41).

9. The method according to claim 8, wherein the step in which the MS(3) is in an idle state and sends the Packet Cell Change Failure message to the source Bess(41) comprises:
if there is no data to be sent by the MS(3), initiating a random access, and sending the Packet Cell Change Failure message to the source BSS(41) in a single uplink channel to be allocated subsequently;
if there is uplink data to be sent by the MS,(3), triggering to establish an uplink Temporary Block Flow, TBF, and sending the Packet Cell Change Failure message to the source 13SS(41) over the TBF.

10. The method according to any one of claims 1 to 9, wherein if the source BSS(41) and the target BSS(42) are the same system, the radio resources from the target BSS(42) are the resources allocated by the target BSS(42) in a target cell.

11. The method according to claim 1 or 2, wherein if the source BSS(41) and the target BSS(42) are the same system, the handover failure flow comprises:
sending, by the MS(3), a Packet Cell Change Failure message to the source BSS(41); and
releasing, by the source BSS(41), the resources allocated for the MS(3) in a target cell upon reception of the Packet Cell Change Failure message.

12. A Mobile Station, MS(3), comprising a monitor (31) and a controller (33), **characterized in that:**
the monitor (31) is adapted to monitor a radio channel of a target Base Station System, BSS(42), after the MS(3) receives a Packet Switched, PS, Domain handover command sent from a source BSS(41), and send the monitoring result to the controller (33);
the controller (33) is adapted to control the monitor (31) to monitor the radio channel of the target BSS(42) and execute a handover failure flow if the monitoring result from the monitor (31) has not been received within a certain period of time.

13. The Mobile Station according to claim 12, wherein the MS(3) further comprises a timer(32) and the timer(32) is adapted to count the monitoring time of the monitor(31) and send the timing result to the controller(33).

14. A system for reducing service interruption of a mobile station during Packet Switched, PS, Domain, handover in mobile communication, comprising a Mobile Station (3), MS, and a network-side device (4), wherein the MS (3) comprises a monitor (31), a timer (32) and a controller (33), and the network-side device (4) comprises a source Base Station System, BSS, (41) and a target BSS (42), **characterized in that:**
the source BSS (41) is adapted to send a PS handover command to the controlled (33);
the target BSS (42) is adapted to send radio resources information to the monitor (31);
the monitor (31) is adapted to monitor whether the target BSS sends the radio resources information, and send the monitoring result to the controller (33);
the timer (32) is adapted to count the monitoring time of the monitor (31) and send the timing result to the controller (33); and
the controller (33) is adapted to control the monitor (31) to monitor and control the timer (32) to time when receiving the PS handover command, and according to the timing result of the timer (32), run the PS handover command and complete the PS handover if the monitoring result from the monitor (31) is received before the timer (32) expires, or execute a handover failure flow if the monitoring result from the monitor (31) has not been received before the timer (32) expires.

## Patentansprüche

1. Verfahren zum Verringern der Dienstunterbrechung einer Mobilstation MS (3) während eines paketvermittelten bzw. PS-Domänen-Handover bei der Mobilkommunikation, **dadurch gekennzeichnet, dass** das Verfahren die folgenden Schritte umfasst:
Überwachen eines Funkkanals eines Ziel-Basisstationssystems BSS (42) durch eine MS (3) beim Empfang eines von einem Quellen-BSS (41) gesendeten PS-Handover-Befehls; und
Durchführen eines Handover-Fehlschlag-Flusses, wenn die MS (3) Funkbetriebsmittelinformationen von dem Ziel-BSS (42) in dem Funkkanal nicht innerhalb eines bestimmten Zeitraums empfängt.

2. Verfahren nach Anspruch 1, ferner mit dem folgenden Schritt:
Laufenlassen des PS-Handover-Befehls durch die MS (3) und Abschließen des PS-Handover, wenn die MS (3) die Funkbetriebsmittelinformationen von dem Ziel-BSS (42) in dem Funkkanal innerhalb des bestimmten Zeitraums empfängt.

3. Verfahren nach Anspruch 1 oder 2, wobei der bestimmte Zeitraum durch die MS (3) aus einer Systemnachricht oder einer kanalassoziierten Nachricht erhalten oder in der MS (3) voreingestellt wird.

4. Verfahren nach Anspruch 1 oder 2, wobei der Schritt des Überwachens des Funkkanals des Ziel-BSS (42) Folgendes umfasst: die MS (3) schaltet auf den Funkkanal des Ziel-BSS (42) und startet einen Timer (32) oder einen Zähler.

5. Verfahren nach Anspruch 4, wobei die MS (3) einen Timer (32) oder einen Zähler gemäß dem folgenden Ansatz startet:
beim Empfang des PS-Handover-Befehls von dem Quellen-BSS (41) startet die MS (3) den in der MS (3) vorgesehenen Timer (32) oder Zähler; und
beim Empfang von durch das Ziel-BSS (42) zugeteilten Funkbetriebsmittelinformationen stoppt die MS (3) den Timer (32) oder den Zähler.

6. Verfahren nach Anspruch 1 oder 2, wobei die Funkbetriebsmittelinformationen Funkbetriebsmittel mit dem Uplink State Flag USF als Kennung umfassen.

7. Verfahren nach Anspruch 1 oder 2, wobei der Handover-Fehlschlag-Fluss Folgendes umfasst:
die MS (3) sendet eine Nachricht Packet Cell Change Failure zu dem Quellen-BSS (41);
das Quellen-BSS (41) sendet eine PS-Handover-Abbruchnachricht zu einem Quellen-SCSN bzw. Service GPRS Supporting Node beim Empfang der Nachricht Packet Cell Change Failure;
der Quellen-SGSN sendet ein Relocation Cancel Request gemäß der PS-Handover-Abbruchnachricht zu einem Ziel-SGSN, um den Ziel-SGSN zu benachrichtigen, das Handover zu beenden;
der Ziel-SGSN sendet eine Relocation Cancel Response zu dem Quellen-SGSN beim Empfang des Relocation Cancel Request; und
der Ziel-SGSN und das Ziel-BSS (42) löschen die der MS (3) zugeteilten Betriebsmittel.

8. Verfahren nach Anspruch 7, das vor dem Senden einer Nachricht Packet Cell Change Failure zu dem Quellen-BSS (41) ferner Folgendes umfasst:
die MS (3) kehrt zu dem Quellen-BSS (41) zurück, wobei der Schritt des Sendens einer Nachricht Packet Cell Change Failure zu dem Quellen-BSS (41) Folgendes umfasst:
wenn die Betriebsmittel des Quellen-BSS (41) nicht freigegeben werden:
die MS (3) befindet sich im Pakettransfermodus und die MS (3) sendet die Nachricht Packet Cell Change Failure in einem paketassoziierten Steuerkanal zu dem Quellen-BSS (41); und
wenn die Betriebsmittel des Quellen-BSS (41) freigegeben werden:
die MS (3) befindet sich in einem Leerlaufzustand und sendet die Nachricht Packet Cell Change Failure zu dem Quellen-BSS (41).

9. Verfahren nach Anspruch 8, wobei der Schritt, in dem sich die MS (3) in einem Leerlaufzustand befindet und die Nachricht Packet Cell Change Failure zu dem Quellen-BSS (41) sendet, Folgendes umfasst:
wenn keine Daten durch die MS (3) zu senden sind, Einleiten eines Direktzugriffs und Senden der Nachricht Packet Cell Change Failure zu dem Quellen-BSS (41) in einem einzigen nachfolgend zuzuteilenden Aufwäusstreckenkanal;
wenn Aufwärtsstreckendaten durch die MS (3) zu senden sind, Triggern zur Herstellung eines Temporary Block Flow TBF der Aufwärtsstrecke und Senden der Nachricht Packet Cell Change Failure zu dem Quellen-BSS (41) über den TBF.

10. Verfahren nach einem der Ansprüche 1 bis 9, wobei, wenn das Quellen-BSS (41) und das Ziel-BSS (42) dasselbe System sind, die Funkbetriebsmittel von dem Ziel-BSS (42) die durch das Ziel-BSS (42) in einer Zielzelle zugeteilten Betriebsmittel sind.

11. Verfahren nach Anspruch 1 oder 2, wobei, wenn das Quellen-BSS (41) und das Ziel-BSS (42) dasselbe System sind, der Handover-Fehlschlag-Fluss Folgendes umfasst:
die MS (3) sendet eine Nachricht Packet Cell Change Failure zu dem Quellen-BSS (41); und
das Quellen-BSS (41) gibt die für die MS (3) in einer Zielzelle zugeteilten Betriebsmittel beim Empfang der Nachricht Packet Cell Change Failure frei,

12. Mobilstation MS (3) mit einer Überwachungsvorrichtung (31) und einer Steuerung (33), **dadurch gekennzeichnet, dass**
die Überwachungsvorrichtung (31) dafür ausgelegt ist, einen Funkkanal eines Ziel-Basisstationssystems BSS (42) zu überwachen, nachdem die MS (3) einen von einem Quellen-BSS (41) gesendeten paketvermittelten bzw. PS-Domänen-Handover-Befehl empfängt, und das Überwachnngsergebnis zu der Steuerung (33) zu senden;
die Steuerung (33) dafür ausgelegt ist, die Überwachungsvorrichtung (31) dafür zu steuern, den Funkkanal des Ziel-BSS (42) zu überwachen und einen Handover-Fehlschlag-Fluss auszuführen, wenn das Überwachungsergebnis von der Überwachungsvorrichtung (31) nicht innerhalb eines bestimmten Zeitraums empfangen wurde.

13. Mobilstation nach Anspruch 12, wobei die MS (3) ferner einen Timer (32) umfasst, und der Timer (32) dafür ausgelegt ist, die Überwachungszeit der Überwachungsvorrichtung (31) zu zählen und das Timing-Ergebnis zu der Steuerung (33) zu senden.

14. System zur Verringerung der Dienstunterbrechung einer Mobilstation während eines paketvermittelten bzw. PS-Domänen-Handover bei der Mobilkommunikation, umfassend eine Mobilstation (3) bzw. MS und eine netzseitige Einrichtung (4), wobei die MS (3) eine Überwachungsvorrichtung (31), einen Timer (32) und eine Steuerung (33) umfasst und die netzseitige Einrichtung (4) ein Quellen-Basisstationssystem bzw. -BSS (41) und ein Ziel-BSS (42) umfasst, **dadurch gekennzeichnet, dass**
das Quellen-BSS (41) dafür ausgelegt ist, einen PS-Handover-Befehl zu der Steuerung (33) zu senden;
das Ziel-BSS (42) dafür ausgelegt ist, Funkbetriebsmittelinfonnationen zu der Überwachungsvorrichtung (31) zu senden;
die Überwachungsvorrichtung (31) dafür ausgelegt ist, zu überwachen, ob das Ziel-BSS die Funkbetriebsmittelinformationen sendet, und das Überwachungsergebnis zu der Steuerung (33) zu senden;
der Timer (32) dafür ausgelegt ist, die Überwachungszeit der Überwachungsvorrichtung (31) zu zählen und das Timing-Ergebnis zu der Steuerung (33) zu senden; und
die Steuerung (33) dafür ausgelegt ist, die Überwachungsvorrichtung (31) dafür zu steuern, den Timer (32) dafür zu überwachen und zu steuern, zu timen, wann der PS-Handover-Befehl empfangen wird, und gemäß dem Timing-Ergebnis des Timers (32) den PS-Handover-Befehl laufen zu lassen und das PS-Handover abzuschließen, wenn das Überwachungsergebnis von der Überwachungsvorrichtung (31) empfangen wird, bevor der Timer (32) abläuft, oder einen Handover-Fehlschlag-Fluss auszuführen, wenn das Überwachungsergebnis von der Überwachungsvorrichtung (31) nicht empfangen wurde, bevor der Timer (32) abläuft.

## Revendications

1. Procédé de réduction de l'interruption de service d'une station mobile, MS(3), durant un transfert de Domaine Commuté par Paquets, PS, dans une communication mobile, **caractérisé en ce que** le procédé comprend :
la surveillance, par une MS(3), d'un canal radio d'un Système de Station de Base, BSS(42) cible, sur réception d'une commande de transfert PS envoyée par un BSS(41) source; et
l'exécution d'un flux d'échec de transfert si la MS(3) ne reçoit pas d'informations de ressources radio du BSS(42) cible dans le canal radio au terme d'une certaine période de temps.

2. Procédé selon la revendication 1, comprenant en outre :
l'exécution, par la MS(3), de la commande de transfert PS et l'achèvement du transfert PS si la MS(3) reçoit les informations de ressources radio du BSS(42) cible dans le canal radio au terme de la certaine période de temps.

3. Procédé selon la revendication 1 ou 2, dans lequel la certaine période de temps est obtenue par la MS(3) à partir d'un message système ou d'un message associé au canal, ou est préréglée dans la MS(3).

4. Procédé selon la revendication 1 ou 2, dans lequel l'étape de surveillance du canal radio du BSS(42) cible comprend la commutation de la MS(3) sur le canal radio du BSS(42) cible, et le lancement par celle-ci d'une temporisation (32) ou d'un compteur.

5. Procédé selon la revendication 4, dans lequel la MS(3) lance une temporisation (32) ou un compteur selon la marche à suivre suivante :
à la réception de la commande de transfert PS depuis le BSS(41) source, la MS(3) lance la temporisation (32) ou le compteur fourni dans la MS(3) ; et
à la réception d'informations de ressources radio allouées par le BSS(42) cible, la MS(3) arrête la temporisation (32) ou le compteur.

6. Procédé selon la revendication 1 ou 2, dans lequel les informations de ressources radio comprennent des ressources radio à Fanion d'Etat de Liaison Montante, USF, comme identifiant.

7. Procédé selon la revendication 1 ou 2, dans lequel le flux d'échec de transfert comprend :
l'envoi, par la MS(3), d'un message d'Echec de Changement de Cellule de Paquet au BSS(41) source;
l'envoi, par le BSS(41) source, d'un message d'Annulation de transfert PS à un Noeud de Support GPRS de Service, SGSN, source, sur réception du message d'Echec de Changement de Cellule de Paquet ;
l'envoi, par le SGSN source, d'une Requête d'Annulation de Déplacement à un SGSN cible en fonction du message d'Annulation de transfert PS pour notifier au SGSN cible d'achever le transfert;
l'envoi, par le SGSN, cible, d'une Réponse d'Annulation de Déplacement, au SGSN source sur réception de la Requête d'Annulation de Déplacement ; et
la suppression, par le SGSN cible et le BSS(42) cible, des ressources allouées à la MS(3).

8. Procédé selon la revendication 7, comprenant en outre, avant l'envoi d'un message d'Echec de Changement de Cellule de Paquet, au BSS(41) source:
le retour par la MS(3) au BSS(41) source, dans lequel
l'étape d'envoi d'un message d'Echec de Changement de Cellule de Paquet au BSS(41) source comprend :
si les ressources du Boss(41) source ne sont pas libérées,
la MS(3) est en mode de transfert de paquets, et la MS(3) envoie le message d'Echec de Changement de Cellule de Paquet au BSS(41) source dans un canal de commande associé au paquet ; et
si les ressources du BSS(41) source sont libérées,
la MS(3) est en mode inactif, et envoie le message d'Echec de Changement de Cellule de Paquet au BSS(41) source.

9. Procédé selon la revendication 8, dans lequel l'étape durant laquelle la MS(3) est en mode inactif et envoie le message d'Echec de Changement de Cellule de Paquet au BSS(41) source comprend :
si la MS(3) n'a pas de données à envoyer, le lancement d'un accès aléatoire, et l'envoi du message d'Echec de Changement de Cellule de Paquets au Boss(41) source dans un canal de liaison montante unique qui est alloué en conséquence ;
si la MS(3) a des données de liaison montante à envoyer, le déclenchement pour établir un Flux de Blocage Temporaire, TBF, aller et l'envoi du message d'Echec de Changement de Cellule de Paquet au BSS(41) source sur le TBF.

10. Procédé selon l'une quelconque des revendications 1 à 9, dans lequel si le Boss(41) source et le BSS(42) cible sont le même système, les ressources radio provenant du BSS(42) cible sont les ressources allouées par le BSS(42) cible dans une cellule cible.

11. Procédé selon la revendication 1 ou 2, dans lequel si le BSS(41) source et le BSS(42) cible sont le même système, le flux d'échec de transfert comprend :
l'envoi, par la MS(3), d'un message d'Echec de Changement de Cellule de Paquet au Boss(41) source ; et
la libération, par le BSS(41) source, des ressources allouées pour la MS(3) dans une cellule cible sur réception du message d'Echec de Changement de Cellule de Paquet.

12. Station Mobile, MS(3), comprenant une unité de surveillance (31) et une unité de commande (33), **caractérisée en ce que :**
l'unité de surveillance (31) est adaptée pour surveiller un canal radio d'un Système de Station de Base cible, BSS(42), après que la MS(3) reçoit une commande de transfert de Domaine Commuté par Paquets, PS, envoyée par un BSS(41) source, et envoyer le résultat de la surveillance à l'unité de commande (33) ;
l'unité de commande (33) est adaptée pour commander à l'unité de surveillance (31) de surveiller le canal radio du Boss(42) cible et exécuter un flux d'échec de transfert si le résultat de la surveillance de l'unité de surveillance (31) n'a pas été reçu au terme d'une certaine période de temps.

13. Station Mobile selon la revendication 12, la MS(3) comprenant en outre une temporisation (32) et la temporisation (32) étant adaptée pour compter la durée de surveillance de l'unité de surveillance (31) et envoyer le résultat de la temporisation à l'unité de commande (33).

14. Système de réduction de l'interruption de service d'une station mobile durant un transfert de Domaine Commuté par Paquets, PS, dans une communication mobile, comprenant une Station Mobile (3), MS, et un dispositif côté réseau (4), dans lequel la MS(3) comprend une unité de surveillance (31), une temporisation (32) et une 3 unité de command (33), et le dispositif côté réseau (4) comprend un Système de Station de Base, BSS, source, (41), et un BSS (42) cible, **caractérisé en ce que :**
le BSS source (41) est adapté pour envoyer une commande de transfert PS à l'unité de commande (33) ;
le BSS cible (42) est adapté pour envoyer des informations de ressources radio à l'unité de surveillance (31) ;
l'unité de surveillance (31) est adaptée pour surveiller si le BSS cible envoie ou non les informations de ressources radio, et envoyer le résultat de la surveillance à l'unité de commande (33) ;
la temporisation (32) est adaptée pour compter la durée de surveillance de l'unité de surveillance (31) et envoyer le résultat de la temporisation à l'unité de commande (33) ; et
l'unité de commande (33) est adaptée pour commander à l'unité de surveillance (31) de surveiller et de commander la temporisation (32) pour mesurer le temps de la réception de la commande de transfert PS, et en fonction du résultat de cadencement de la temporisation (32), exécuter la commande de transfert PS et achever le transfert PS si le résultat de la surveillance provenant de l'unité de surveillance (31) est reçu avant l'expiration de la temporisation (32), ou exécuter un flux d'échec de transfert si le résultat de la surveillance de l'unité de surveillance (31) n'a pas été reçu avant l'expiration de la temporisation (32).
